# EUROPEAN PATENT APPLICATION

(11) **EP 4 822 689 A1**
(43) Date of publication of application: **14.10.2026**
(21) Application number: 25382374.4
(22) Date of filing: 10.04.2025
(51) Int. Cl.: G10L 17/00, G10L 25/30, G10L 25/51, G10L 25/69, G06F 21/32, G06F 21/62, G06N 3/08, G10L 21/003

(54) **METHOD, COMPUTER DEVICE AND COMPUTER PROGRAMS FOR ENHANCING PRIVACY AND SECURITY IN AUDIO AND VIDEO COMMUNICATIONS**

(71) Applicant: Telefonica Innovacion Digital SLU, 28050 Madrid (ES)
(72) Inventor: López Gavilánez, Wiliam Fernando, 28050 Madrid (ES); Segovia Fernández, Guillermo, 28050 Madrid (ES); Gómez Guerrero, Pablo, 28050 Madrid (ES); de las Heras del Dedo, Rafael, 28050 Madrid (ES)
(74) Representative: Carlos Hernando, Borja

(57) **Abstract**

A method, computer device and computer program for enhancing privacy and security in audio and video communications are proposed. The method detects whether an incoming audio stream contains patterns and/or anomalies suggestive of artificially generated synthetic voice by performing a real-time voice analysis including chunking the incoming audio stream into audio segments; identifying audio features by processing the audio segments; producing a sequence of probabilities indicative of a likelihood that the incoming audio stream comprises synthetic voice by a machine learning algorithm processing the identified audio features; computing a probability score based on the produced sequence of probabilities; and determining that the incoming audio stream contains artificially generated synthetic voice if the computed probability score is similar to a given threshold; triggering an alert upon detection of an artificially generated synthetic voice; and anonymizing an outgoing audio stream of the user by modifying or removing user voice signals comprising personal identifiable information.

## Description

### TECHNICAL FIELD

The present invention relates to the field of communication security. More specifically, the invention relates to a method, computer device and computer programs for enhancing privacy and security in audio and video communications.

### BACKGROUND OF THE INVENTION

The contemporary world is witnessing a significant surge in the creation and utilization of synthetic media. For instance, deepfakes are a sophisticated form of synthetic media generated through artificial intelligence (Al) and machine learning (ML). They involve the manipulation of audio, video, and images to create highly realistic but fabricated content. This technology, while offering innovative applications in entertainment and creative industries, poses substantial risks in terms of identity theft, fraud, and misinformation.

The evolution of this technology is marked by its increasing precision and accessibility. Initially confined to specialized tech skilled individuals, the tools and techniques for creating synthetic media as deepfakes are now widely available, lowering the barrier to entry for malicious actors. This democratization of technology has led to a pervasive threat across various domains, from finance to personal security.

In the current landscape, societal trust has been significantly compromised due to the increasing sophistication of generated media. As distinguishing between authentic and fabricated content becomes more difficult, this ambiguity breeds skepticism and distrust toward both institutions and individuals.

The proliferation of generative Al technology has been accompanied by a corresponding rise in identity spoofing and related crimes. Al-generated content can be used to impersonate individuals, bypass biometric security systems, and commit fraud. For instance, synthetic audios can be employed to create false evidence, manipulate public opinion, or conduct social engineering attacks. The ability to fabricate realistic audio and video content undermines the reliability of digital media, eroding trust in communications and digital transactions.

In conclusion, the utilization of synthetic voices in audio and video communications introduces significant risks. This highlights the necessity for the development and implementation of robust detection mechanisms that can effectively combat these threats. These detection systems must be aligned with the state-of-the-art generative techniques and possess the adaptability to evolve over time, ensuring their continued effectiveness amidst ongoing technological advancements. Additionally, defensive systems that protect the identity of speakers during interactions with untrusted contacts represent a proactive security measure. Such systems safeguard against the misuse of the speaker's identity through voice cloning, thereby enhancing the overall security framework. Together, these strategies form a comprehensive defense against the sophisticated and evolving landscape of synthetic voice threats, ensuring the integrity and confidentiality of communications in an increasingly digital world.

Some patents and patent applications are known in the field of synthetic speech detection.

For instance, CN116758943A discloses a detection method for artificial intelligent synthesized voice in multiple scenarios. It involves collecting real audio samples, synthesizing them using different vocoders, and constructing a multi-scene synthesized voice detection dataset. The method includes preprocessing the dataset, extracting high-level features, decomposing and splicing features to obtain time and frequency domain diagrams, and establishing a synthesized audio detection model using multi-task learning. The model is then utilized to detect whether the audio sample is synthesized or not.

CN114242047B discloses a method for detecting real and synthesized voices by extracting acoustic features, predicting the sampling rate, and using a voice detection model to classify the voice. The method involves using pre-trained models and specific acoustic features to achieve accurate voice detection. Additionally, the document describes the training process for the models, including the use of known speech samples to train the sampling rate prediction model and the voice detection model.

CN117373482A discloses a method for detecting synthesized speech within noisy environments using an improved residual error network. The process begins with inputting noise data for processing and spectrogram feature extraction. These features are sequentially fed through an enhanced residual block and traditional residual block, involving multiple layers of convolution and feature enhancement processes. The network is trained by assessing and adjusting error scores to differentiate between real and synthesized voices. The model is then used to infer the authenticity of voices, providing scores that indicate whether the voice is synthetic or real. Specific steps include noise data preparation, feature extraction using spectrograms, improved residual block processing for feature enhancement, and traditional residual block processing for identity mapping. Backpropagation is used for parameter updates during training.

CN117393000B discloses a method for detecting synthetic speech using a neural network and feature fusion approach. The method involves acquiring an audio dataset, extracting both acoustic and spectrogram image characteristics, and inputting these into a pre-trained synthetic audio detection model. Separate authenticity scores are obtained from both features and are then weighted and fused to produce a final authenticity score. This score, compared against a preset threshold, determines whether the audio is authentic or synthesized. The model consists of a feature-to-score module and an image-to-score module, each responsible for generating authenticity scores from acoustic features and spectrogram images, respectively. The training phase includes preprocessing, feature extraction, model training using a gradient descent method, and optimization. In the detection phase, the final score is calculated through weighted fusion of the intermediate scores, ensuring robust detection of synthetic audio.

CN117409820A discloses a dual-branch synthetic speech detection model integrating attention mechanisms and SE (Squeeze-and-Excitation) networks, specifically named SE-Inc. The model consists of several modules: a feature extraction module using the SincNet network to process raw voice waveforms into initial voice feature maps, an attention branching module that dynamically weights these feature maps to generate an attention map and branch classification result, and an SE-Inc branch module where the attention map is fused with the initial voice feature map for another classification result. The model operates in two phases: training and detection. During training, a weighted cross-entropy loss function optimizes the combined classification results from both branches, updating the model through back propagation. The detection phase involves decision-level weight fusion to finalize the synthetic speech classification. The approach ensures sophisticated and efficient identification of synthetic speech by leveraging deep convolutional networks, attention mechanisms, and advanced feature fusion techniques.

CN115985340A discloses a method and system for detecting synthetic speech using a Generative Adversarial Network (GAN). The technique involves acquiring and preprocessing voice data, applying a trained voice detection model, and classifying the results. The model is trained using a series of steps including natural language emotion analysis, convolutional neural networks (CNN), multi-head attention mechanisms, and deep learning feature extraction. The voice detection process comprises steps such as framing, windowing, applying Mel-cepstral coefficients for initial feature extraction, and using multi-scale deep convolutional networks for advanced feature extraction. The GAN comprises of voice generation using text conversion, encoding, multi-head attention, decoding, synthesis, and discrimination via feature extraction units leading up to classification as synthetic or non-synthetic speech.

CN116543794A discloses a method and apparatus for voice detection using a multi-scale feature reconstruction approach. The method involves acquiring original voice data, processing it through a preset voice detection model comprising feature extraction and attention networks, scoring the voice data, and performing synthesized voice detection to determine if the original voice data is synthesized or non-synthesized.

CN116758943A discloses a method and apparatus for detecting synthesized speech. The method involves acquiring a voice signal, extracting its acoustic features, inputting them into a classification model, generating a loss function, and updating the model based on the loss function to obtain the detection result of the voice signals. The apparatus includes various modules for acquiring, extracting, generating, and updating the classification model to detect synthesized speech.

On the other hand, and related with voice anonymization, CN106164922B provides a method for establishing a secure, one-time data channel between two devices involved in voice communication by utilizing audio fingerprints. It creates unique fingerprints of the real-time audio signal exchanged during communication, comparing these fingerprints for a match, and upon verification, enabling data exchange via an authenticated channel. Anonymization processes ensure privacy before fingerprint comparison. The system supports various voice communications like phone calls and conferences, and it can notify users via visual, tactile, or audible signals when the fingerprints match.

Therefore, synthetic speech detection involves the methods and methodologies used to identify Al-generated voices. Currently, many solutions require specific hardware and software components limiting the scope of the solutions:
- Hardware: specific set-up such as a processor, memory, and communication interfaces. While this hardware setup can lead to a high-performing system under certain conditions, it also has potential limitations that restrict the generalizability of the final solution.
- Software: focus on very specific neural network architectures (e.g., classification residual networks), which might limit generalizability and adaptability to new or evolving types of speech generation.

Moreover, some of the existing solutions involve complex schemes for synthetic speech classification, including:
- The need for remote processing of acoustic information to classify between real and synthetic voices. Since the human voice is considered biometric information, sending audio information out of the device poses a potential risk for the user.
- Multimodal approaches not only rely on speech for discrimination but also use transcription and NLP for emotion recognition, making them impractical for real-time and resource-constrained environments.
- Parallel speech processing in multiple branches using diverse types of neural networks that extract different characteristics of the signal. Some methods combine GANs with Attention-based networks, create custom speech features with neural networks, or fuse diverse systems posteriors with ensembles. While this approach can achieve excellent results, it is not realistic for real-time processing.

To continue with, most of current solutions rely on a traditional classification framework, involving database training of one or more classifiers through processes such as feature extraction, network forward, loss calculation, and backpropagation using gradient descent. Typically, these solutions utilize features that involve extracting the magnitude of the spectrogram. However, recent advancements in speech synthesis have significantly improved the quality of generated voices by leveraging complex spectrograms, with the use of both magnitude and phase representing the current state-of-the-art in speech synthesis. Consequently, an effective fake speech discriminator must align with the advanced techniques employed in speech generation. Furthermore, it is essential to note that this methodology encompasses static schemes for classification, which does not scale well when addressing the rapidly evolving technologies in speech synthesis.

Another aspect that the existing solutions lack is that they are reactive and defensive. At no point is a proactive defense mechanism proposed in which the user can protect their voice by adding some kind of watermark capable of offering rapid cloning detection and traceability. In addition, the existing solutions often aim to establish a secure channel between two ends of a call, introducing unnecessary complexity. This can include the reliance on external servers or incurring initial delays in communication, which are impractical and cumbersome for ensuring real-time security.

Therefore, the unsolved problems to be addressed include:
- The need for a dedicated device with concrete hardware, such as a battery or wireless connection. However, it is preferred to develop a device-agnostic solution that can be implemented across various platforms.
- Synthetic speech detection technologies should be inclusive accessible, requiring a simple and effective monitoring and alarm scheme. It is important to ensure that the system remains effective without unnecessary complexity, avoiding the combination of too many sources of information or the definition of a complex detection scheme.
- The preservation of user privacy is crucial, causing a preference for locally processing user data rather than transmitting multimedia information to a server. This approach is essential to maintain the confidentiality and security of user information.
- A fast and efficient solution is needed to accurately detect synthetic speech in real-time. Complex technologies such as NLP or Attention-based models are not suitable for this purpose due to their inability to support real-time processing.
- The current State-of-The-Art solutions face challenges in adapting to new methods for synthetic speech generation, leading to false negatives and potential compromise in system effectiveness. It is imperative to implement a continuous learning system to ensure accurate detection and to avoid false negatives.
- Although reactive technologies are prevalent, they typically only provide protection after an attack has occurred. Nevertheless, user speech remains vulnerable to recording and misuse for malicious purposes. Proactive protection measures are necessary to safeguard users' speech from these threats effectively.
- Furthermore, it is essential to address the limitations that some systems have in being applicable to low and middle-income settings due to their dependency on specific features or resources. The ideal technology should not rely on user input beyond having the device present at their home. Additionally, the solution should be versatile and capable of working in a broad range of situations without depending on specific scenarios.

### DESCRIPTION OF THE INVENTION

To overcome the drawbacks of the prior art, the present invention provides, according to one aspect, a method for enhancing privacy and security in audio and video communications. The method comprises detecting, by a computing device of a user, whether a received incoming audio stream contains patterns and/or anomalies suggestive of artificially generated synthetic voice by performing a real-time voice analysis of the received audio stream, the real-time voice analysis comprising chunking the incoming audio stream into a plurality of audio segments using a sliding window technique; identifying one or more audio features by processing the plurality of audio segments; producing a sequence of probabilities indicative of a likelihood that the incoming audio stream comprises synthetic voice by means of a continuously trained machine learning algorithm processing the identified one or more audio features; computing a probability score based on the produced sequence of probabilities; and determining that the incoming audio stream contains artificially generated synthetic voice if the computed probability score is at least equal to a given threshold; triggering, by the computing device, an alert to the user upon detection of an artificially generated synthetic voice; and anonymizing, by the computing device, an outgoing audio stream of the user by modifying or removing, in real-time, voice signals comprising personal identifiable information of the user.

In some embodiments, before the computing of the probability score, the method comprises removing noise from the produced sequence of probabilities by post-processing the one or more audio features.

In some embodiments, the detecting step further comprises using a self-synthetic suspicious voice detection feedback received from the user. In this case, the method further comprises capturing audio samples of the incoming audio stream and employing Privacy-preserving Federated Learning to train the machine learning algorithm.

According to the invention, modifying the voice signals may comprises changing the pitch, one or more frequencies, the speed, and/or the timbre of the voice signals.

In some embodiments, the method also comprises adding at least one of noise and statistical information to the outgoing audio stream.

In some embodiments, the anonymizing step is triggered upon activation by the user. Alternatively, it is triggered upon detection of the artificially generated synthetic voice.

In some embodiments, the anonymizing step is triggered based on information, including a phone number, a pin number, a keyword or a password of the user.

The machine learning algorithm may comprise a neural network including a Convolutional Neural Network, a Recurrent Neural Network, a Residual Network, a Lambda Network, a Broadcasted Residual Learning, a Performer-based Network, a Conformer-based Network, a Branchformer-based Network, and/or a Paraformer-based Network.

In some embodiments, the machine learning algorithm is continuously trained by using a database comprising audio recordings supplemented with metadata, the latter comprising labels, timestamps of events speech, recording conditions, anonymized speaker identifiers and/or features.

In some embodiments, the machine learning algorithm is further trained using data augmentation techniques and/or impulse responses from acoustic spaces and microphones.

In some embodiments, either before the detecting step or as part thereof, the method further comprises checking whether the incoming audio stream phone number is included in a spam phone list or is likely to be spam.

In some embodiment, upon detection of the artificially generated synthetic voice, and before the triggering of the alert, the method comprises analyzing whether the received incoming audio stream contains dangerous or gross content using a language model.

Present invention also proposes, according to another aspect, a computer device comprising at least one memory and one or more processors. The one or more processors are configured to detect whether a received incoming audio stream contains patterns and/or anomalies suggestive of artificially generated synthetic voice by performing a real-time voice analysis of the received audio stream using a continuously trained machine learning algorithm, the real-time voice analysis comprising chunking the incoming audio stream into a plurality of audio segments using a sliding window technique; identifying one or more audio features by processing the plurality of audio segments; producing a sequence of probabilities indicative of a likelihood that the incoming audio stream comprises synthetic voice by means of a continuously trained machine learning algorithm processing the identified one or more audio features; computing a probability score based on the produced sequence of probabilities; and determining that the incoming audio stream contains artificially generated synthetic voice if the computed probability score is at least equal to a given threshold. Furthermore, the one or more processors are configured to trigger an alert to a user upon detection of an artificially generated synthetic voice, and anonymize an outgoing audio stream of the user by modifying or removing, in real-time, voice signals comprising personal identifiable information of the user.

Other embodiments of the invention that are disclosed herein also include software programs to perform the method embodiment steps and operations summarized above and disclosed in detail below. More particularly, a computer program product is one embodiment that has a computer-readable medium including computer program instructions encoded thereon that when executed on at least one processor in a computer system causes the processor to perform the operations indicated herein as embodiments of the invention.

Therefore, the invention provides a new solution for detecting synthetic voices and protecting user privacy during audio and video communications. In some embodiments, the core of the synthetic voice detection mechanism/technology processes a learned complex spectrogram. Moreover, the invention provides or is equipped with a real-time voice anonymization feature/element, which safeguards users' biometric data by modifying the users voice signals during transmission, thereby maintaining the confidentiality of its identity. This dual functionality not only enhances user security and privacy but also fortifies the system against the constantly evolving threats associated with synthetic voice misuse.

The dual-functional mechanisms/elements work, initially, at the waveform level, but can be extended to any other source of detection like number phone analysis or text analysis, and that enhances user security during audio and video communications.

Some of the key elements that differentiate the invention from the state-of-the-art are:
- Real-time processing via efficient neural networks.
- Continuous learning for synthetic speech detection, leveraging PPFL to ensure models remain up to date without compromising privacy. The approach also integrates human supervision, which is typically a costly data resource, thereby maintaining the relevance and accuracy of the models.
- Neural feature extraction learned during training which preserves complex numbers in the form of magnitude and phase. It allows alignment with contemporary speech generation techniques. This alignment enhances the model's ability to seek information not present in traditional feature extraction methods.
- The invention proposes a dual-layer approach: a protective mechanism against synthetic voices and a defensive strategy for safeguarding personal data. This dual functionality ensures users can maintain secure communication, even with untrusted contacts, thus providing an additional layer of security.
- The invention emphasizes the crucial aspect of preserving user data privacy. Specifically, the incoming audio processing and the outgoing audio processing is conducted locally on the device. This approach ensures that user information remains confidential and secure, without compromising privacy.

### BRIEF DESCRIPTION OF THE DRAWINGS

The previous and other advantages and features will be more fully understood from the following detailed description of embodiments, with reference to the attached figures, which must be considered in an illustrative and non-limiting manner, in which:

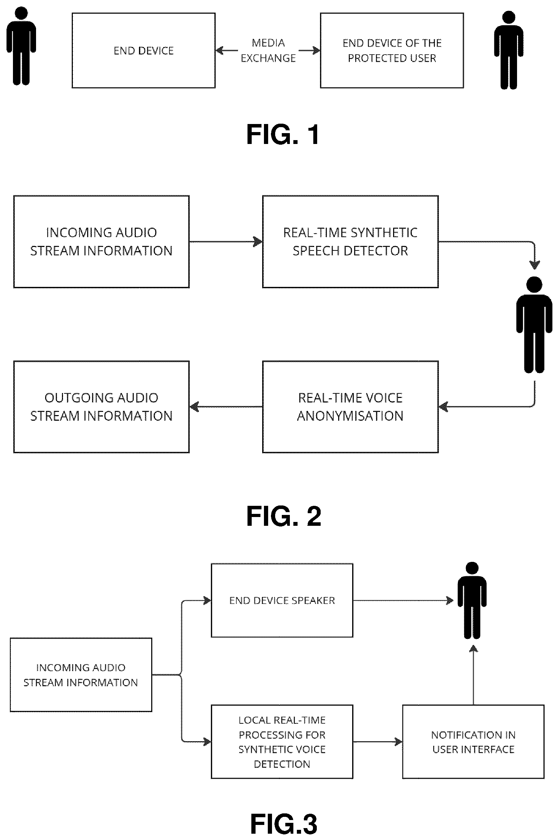

Fig. 1 schematically illustrates an overview of a system for application of the present invention. Two end-computing devices interact through a communication where media information is exchanged. The protected user's end-computing device processes the incoming and outgoing media locally to extract insights or to transform the outgoing media.
Fig. 2 schematically illustrates an embodiment of an audio stream flow executed in the protected user computing device. The incoming audio stream is real-time processed by a synthetic-detection mechanism to provide insights to the protected user. The outgoing audio stream is pre-processed before being transmitted to a call, to perform real-time anonymization.
Fig. 3 schematically illustrates an embodiment of an incoming audio stream flow executed on the protected user computing device. The incoming audio information follows two parallel paths. First, it is forwarded to the device speaker. Second, it is processed locally by the detection mechanism. If a detection happens, then a notification is presented to the protected user, for example, over an user interface.

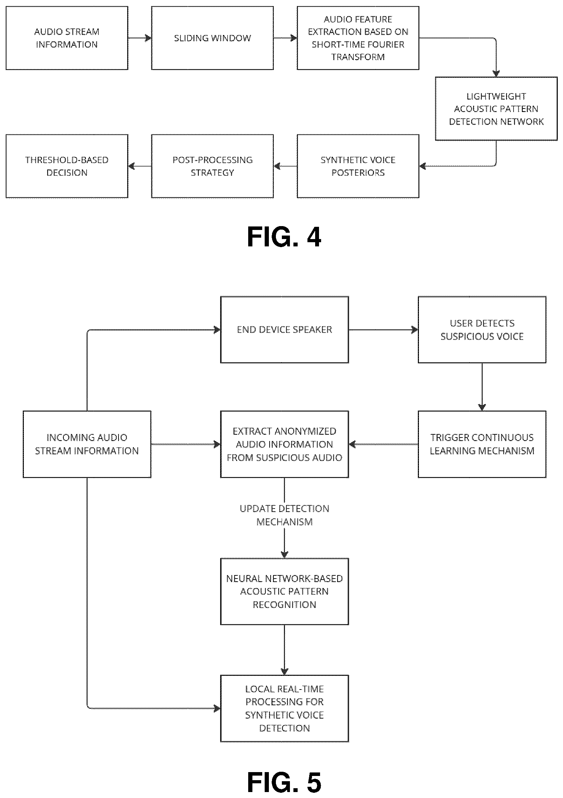

Fig. 4 schematically illustrates an embodiment of an n-device incoming audio processing strategy. First, the raw audio sequence is chunked into small segments. Those segments are further processed to extract only relevant information, this is called feature extraction. This feature extraction is learned during training. After, a machine learning algorithm such as a neural network, or the like, processes the audio features sequence and produces a sequence of probabilities. Third, the produced probabilities are post-processed to remove noise. Finally, a threshold-based decision is taken from a score obtained.
Fig. 5 schematically illustrates a user feedback usage method for continuous learning. The user is continuously analyzing the information the speaker reproduces, and, if a suspicious speech occurs, then the user can report it activating the model update pipeline. It makes use of a continuous learning technique that results in a new version of the synthetic speech detection model.

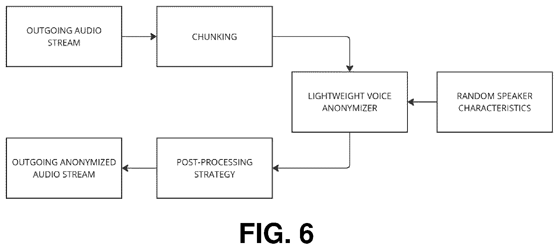

Fig. 6 schematically illustrates an embodiment of an on-device outgoing audio stream processing strategy. First, the outgoing audio is recorded by a microphone, and then that stream is chunked into small segments. Those segments are processed by a lightweight voice anonymizer making use of random speaker characteristics. Those random speaker characteristics are maintained during a whole audio call. After, the anonymized chunks are merged to produce a continuous anonymized outgoing audio stream.

### DETAILED DESCRIPTION OF THE INVENTION AND OF PREFERRED

### EMBODIMENTS

Present invention provides a technology/solution for enhancing privacy and security in audio and video communications, such as calls.

In some embodiments, the invention is implemented via a dual-functional protection system that comprises a synthetic speech detection system to process an incoming audio stream and a voice anonymization system to process an outgoing audio stream to remove personal identifiable information (PII). Particularly, both systems are based on lightweight processing mechanisms, so that they can run on standard mobile phones or tablets, and process the audio stream in real-time. During a communication, if synthetic speech occurs the users are alarmed allowing them to act if needed. This enables to promptly detect and manage potential attacks. Moreover, the synthetic detector is continuously learning over the use. If the user itself detects a possible synthetic voice it can report it, which enables improving the detection. Consequently, the invention starts from a predefined behavior that is continuously improved by using the feedback provided by analysis of past activity. The voice anonymization system protects users' privacy, it processes the outgoing audio streams to remove any PII, thereby anonymizing the user's voice. This is particularly crucial when users engage in conversations where they prefer to withhold their identity or when communicating with unverified or untrusted parties. The voice anonymization function can be user-activated and/or can be enabled by default to ensure privacy is maintained consistently across all calls. Both systems are decoupled, allowing for their separate or joint operation according to user preferences or specific configuration (e.g. the voice anonymizer could be triggered based on information such as the phone number).

Fig. 1 illustrates a communication scenario in which a phone call enables the exchange of media information between two (it could be more) end computing devices. In this embodiment, the entire system operates locally only at the waveform level on the user's computing device, ensuring complete privacy and security. To delve deeper into the system's architecture, two subsystems can be described: the first subsystem is responsible for real-time voice analysis and detection of synthetic speech, while the second subsystem manages the transformation and protection of the user's voice though speech anonymization.

Fig. 2 illustrates the audio stream processing within a protected user computing device featuring two distinct sub-systems. In the process, the incoming audio stream is analyzed by a real-time synthetic speech detection mechanism. Concurrently, the outgoing audio stream can be processed for real-time anonymization of the user's voice, ensuring the user's identity remains protected during the call. Together, these subsystems work in tandem under the following description.

The first subsystem is dedicated to monitoring incoming audio streams. It is equipped with a synthetic speech detection module that continuously analyzes the audio for signs of artificially generated voices. Upon detecting such a voice, the system immediately issues a notification to the user, allowing for timely and appropriate action. This detection capability is not static but it can evolve through a continuous learning process that incorporates user feedback to refine its accuracy. This dynamic improvement is facilitated by a non-invasive learning algorithm that enhances the classification mechanism without compromising the user's personal information. As such, the detection accuracy of the system progressively improves with usage, providing increasingly reliable protection.

The second subsystem addresses the security of outgoing audio streams. Upon activation by the user, this subsystem employs speech-to-speech transformation technology. This technology processes the user's original speech to produce an anonymized audio output. While the resulting speech preserves the intelligibility and semantic information of the original communication, it eliminates any identifiable speaker-specific characteristics. Consequently, this anonymized speech cannot be exploited to impersonate the protected user using any speech synthesis or generation technologies.

The voice anonymization subsystem can be triggered through various mechanisms, including the detection of synthetic voice by the initial subsystem, manual activation by the user upon receiving calls from untrusted contacts, or alternative methods. These methods may include other services such as phone number analyzers, or transcription-based analysis. This versatile activation capability enhances both the flexibility and security of the user's communication, effectively protecting the user's voice from potential impersonation and other associated threats during real-time interactions.

Fig. 3 depicts the scenario when the audio stream reaches the user's end computing device. The audio is divided to be delivered to the user and, on the other hand, analyzed. The audio stream arriving from the other end is directly delivered to the end user. This ensures that the user receives the audio in real-time, maintaining the integrity and immediacy of the communication. Moreover, the same audio stream delivered to the user is processed locally in real-time to detect if it has been synthetically generated. Upon synthetic speech detection, the user is promptly notified, for example, through the user interface. This notification allows the user to be aware of potential threats and take appropriate actions to safeguard their security.

Fig. 4 illustrates an on-device real-time voice analysis for synthetic speech detection. In this case, the audio stream is analyzed in smaller segments using a sliding window technique, which may feature overlapping or non-overlapping windows. Each window can undergo feature extraction, where relevant information for synthetic speech discrimination is identified; this process can be adapted during a continuous learning phase. Subsequently, a machine learning algorithm (e.g. a neural network) processes each audio feature and generates a probability score. The detection mechanism identifies patterns and anomalies suggestive of synthetic audio. Finally, a post-processing strategy is applied to the sequence of generated probabilities, producing a score that allows the reliable discrimination of synthetic voice presence.

Fig. 5 illustrates an scenario where a user identifies a suspicious voice during an ongoing call. The user suspects the incoming audio has been synthesized based on certain distinctive features. The user takes proactive action by reporting this concern, thereby triggering the continuous learning mechanism. This mechanism involves extracting anonymized data from the incoming audio and locally updating the detection mechanism on the user's protected computing device. Subsequently, this locally acquired learning is disseminated to all other protected computing devices. Importantly, the disseminated information used to update the global detection mechanism is not the raw audio, but rather the processed information derived from the audio. This data is non-reversible and includes only differential variations necessary for the detection mechanism to be updated.

When the protected user decides to anonymize its voice the outgoing audio stream is manipulated locally to anonymize it. Fig. 6 depicts the processing strategy for the outgoing audio stream. First, the audio stream is chunked into small audio fragments that could be overlapped between them. Each of these audio fragments is processed to be anonymized using a lightweight mechanism. During a communication, an arbitrary anonymized speaker characteristics are generated randomly, after these characteristics are used to process each audio chunk to be coherent between audio chunks. Finally, the anonymized chunks are processed to guarantee continuity in the audio.

The following describes a preferred embodiment of the present invention. This example illustrates possible implementations but does not limit the previously presented call protection system.

Any generic computing device for audio or video communications could be employed by the protected user. This includes standard mobile phones and tablets. In those devices the incoming and outgoing audio stream is locally processed in real-time. The proposed protection method works only at the waveform level, firstly, by processing the incoming waveform, and secondly, by manipulating the outgoing waveform in the case that it is required. In the preferred embodiment, the mechanism used to process the audio in real-time on-device are neural networks. Those neural networks are limited in terms of number of operations and parameters to guarantee a Real Time Factor (RTF) smaller than 1.

Incoming audio streams are processed, and when an artificially synthetic voice is detected, the computing device triggers an alert to inform the protected user, allowing him/her to take appropriate action. Additionally, the outgoing audio stream of the user can be anonymized to modify or remove any voice signal including PII.

For the preferred embodiment, the present invention focuses on the development of lightweight neural networks through the application of supervised learning. A comprehensive database can be utilized, consisting of audio recordings accompanied by metadata that includes essential information required for the learning process. This metadata encompasses labels, timestamps of speech events, recording conditions, anonymized speaker identifiers, and anonymized speaker characteristics, among others.

During the training phase, the database undergoes extensive preprocessing to enhance its size synthetically. For example, clean audio samples can be contaminated with various types of noise across a broad spectrum of Signal-to-Noise Ratios (SNR). Additionally, data may be intentionally altered by omitting portions of information, allowing the neural network to learn to operate effectively even with incomplete data. This procedure is designed to boost the neural network's robustness against challenges such as noise interference and speaker variability.

Furthermore, in some embodiments, the invention may leverage the use of impulse responses from different acoustic spaces and microphones to simulate diverse acoustic environments. Additionally, the invention can include data augmentation techniques pertinent to telecommunication applications, such as the application of different audio codecs, resampling of audio files, and the simulation of packet loss scenarios. By doing so, the neural networks are trained to perform reliably under varying acoustic conditions, thereby enhancing their overall robustness and versatility.

Many solutions are available for the implementation of lightweight neural networks. The wide span covers Convolutions Neural Networks, Recurrent Neural Networks, Residual Networks (ResNets), Lambda Networks or Broadcasted Residual Learning. Also, lately Transformer efficient alternatives have appeared: Performers, Conformers, Branchformers, Paraformers and many others. In the preferred embodiment, Paraformers-based networks are used.

The synthetic voice detection system is a neural network itself, particularly, a Paraformer encoder-only classifier. It can also utilize neural feature extraction learned during the training process. These learned features are forced to follow a process like the Short-Time Fourier Transform (STFT) but conserving after the complete complex number in the form of magnitude and phase. The key innovation lies in aligning with State-of-the-Art techniques for synthesizing speech, which have recently shown that intelligibility can be affected by phase reconstruction. Consequently, artifacts introduced by synthetic speech generators can be identified in both magnitude and phase. By learning the parameters for extracting neural audio features, the system can effectively detect artifacts, even if speech synthesizers advance to minimize artifact generation.

The system is initiated from a foundational knowledge base comprising real speech samples and a multitude of synthetic speech generated samples. Using this database, a neural network-based model is trained, concurrently training the neural feature extractor. In the preferred embodiment, the initial weights of the synthetic speech discriminator are established during this initial training phase. Subsequently, during use, the model's weights are continuously updated in alignment with advancements in synthetic speech generators, leveraging user feedback.

Upon a user reporting a suspicious call through the user interface, it activates the continuous learning method as illustrated in Fig. 5. This method involves capturing samples of the suspicious voice and employing Privacy-preserving Federated Learning to collaboratively train a model without data sharing. Local training is conducted so that the data used never leaves the device. Rather than transmitting raw data, protected devices work together to enhance a centralized model by sending only anonymous model updates derived from local training. These updates are further protected using Differential Privacy, which adds noise to the updates, thus complicating the extraction of individual data points.

Additionally, Secure Multi-Party Computation (SMC) can be employed, allowing multiple parties to jointly compute a function on their private inputs without revealing the inputs to each other. The preferred embodiment also incorporates a centralized Trust Consensus: Participants agree on a participation matrix and collaboratively generate decryption key fragments, ensuring control over the secure aggregation process. This multi-layered approach ensures robust data privacy and security throughout the learning process.

To continue with, the anonymizer model is implemented as a Paraformer-based encoder-decoder neural network. The encoder layer exclusively extracts semantic information, and within the latent space, a conditioning speaker vector is employed to resynthesize the speech while ensuring that no personal data is preserved. From a predefined set of synthetic speaker embeddings, one is selected randomly. Subsequently, the latent representation is resynthesized by the decoder, conditioned by the selected synthetic speaker embedding. To maintain coherence throughout the entire conversation, the chosen speaker embedding is consistently applied.

In this embodiment, both the synthetic speech detector and the voice anonymizer operate on fixed-length audio windows. The optimal length of these windows must be determined through a thorough analysis to balance performance and computational load effectively. The audio stream is processed using a sliding window approach. For each audio window, the respective model processes the audio input and generates an output.

For the synthetic speech detector, the model outputs a probability indicating the likelihood that the processed audio contains synthetic speech. Additionally, the detection system allows the user to adjust the operating point, thereby tailoring the model's sensitivity to meet specific needs.

For the voice anonymizer, the model processes the audio and produces resynthesized audio as its output, thereby anonymizing by transforming the original voice in a way that prevents malicious use from the other end. The generated speech is impossible of deanonymize. This system can transform the pitch, formant frequencies, speed, timbre, and use noise addition or statistical transformation to effectively anonymize voice characteristics while maintaining intelligibility.

Finally, although the models are designed to have limited computational needs, additional processing can be performed to enhance their real-time performance. In the preferred embodiment, two techniques are employed:
Post-training quantization: This process reduces the model's size and increases inference speed by converting the default 32-bit floating point types to smaller types (e.g., 8-bit integer). This conversion is performed after the training phase to avoid limiting the model to specific target hardware from the beginning.
Mobile optimization: This technique involves refining network operations to minimize size and inference time. For instance, multiple operations can be combined into a single step to enhance efficiency. During the training phase, however, these operations remain distinct to preserve the integrity of the training process and facilitate the use of the chain rule for derivative calculations.

By implementing these techniques, the models achieve improved real-time performance while maintaining their effectiveness and accuracy.

In an alternative embodiment, the voice anonymizer process is designed to be reversible. During the speech-to-speech conversion on the computing device, the invention also generates information that allows the reversal of the voice anonymization process. This information is stored locally and can be utilized as a mechanism to verify the origin of the speech. This dual capability not only ensures the privacy of the user during real-time communication but also provides a means to authenticate the original voice if necessary, enhancing both security and traceability.

In an alternative embodiment, the synthetic speech detector could be complemented or replaced by a phone number-based detection system. This system verifies the phone number against a list or through phone number analysis, extracts phone number information, and determines whether the call should be answered personally or anonymously if the origin is suspicious or unknown. Additionally, users can configure the level of protection in such situations, enabling anonymization based on their preferences when dealing with suspicious or unknown call origins.

In an alternative embodiment, the synthetic speech detector could be complemented or replaced by a language model system. This system considers the content of the message emitted by the call initiator, analyzing whether the content is plausible for the user to address. The invention protects the user when suspicious meanings are detected in the transcribed text message. It is based on a large language model configured with a prompt to identify potential hazards in the delivered message.

In an alternative embodiment, the detector could be orchestrated using a combination of multiple detection sources. Firstly, before the call is answered, a phone number analysis validates the incoming call number. Next, a synthetic speech detector analyzes the voice of the caller to determine if it is synthetic. Finally, a large language model analyzes the text content of the delivered message. The aggregation of results from these multiple systems determines whether to enable protection.

Some of the advantages of the present invention are:
- Real-time on-device processing: the invention is engineered for real-time, on-device inference, enabling efficient and immediate detection of synthetic speech without the need to offload computation to external servers. This approach ensures user privacy and reduces latency. Similarly, the voice anonymization process operates on-device, ensuring no perceptible delay is introduced in the call while maintaining the user's privacy.
- Integration in audio/video calls: unlike generic speech processing technologies, the invention is specifically tailored for integration into audio/video communications such as calls. This application-specific focus enhances the user experience by providing protection during live communications. It works with specific audio codecs and sampling rates.

- Heterogeneous device compatibility: the invention is not bound to any specific device. It is optimized to function across a wide range of standard mobile phones or tablets, ensuring broad accessibility and applicability.
- Learned audio features: It follows a process like the Short-Time Fourier Transform (STFT) but it is not the traditional process, and it is learned from data for better discrimination. It also deals with complex numbers in the form of magnitude and phase to have rich information to classify.
- Continuous learning with user feedback: incorporating continuous learning mechanisms allows the system to improve over time based on user feedback. This iterative improvement process not only enhances system accuracy but also ensures that the model adapts to new types of synthetic speech as they emerge.
- Protective and defensive system: a protective mechanism against synthetic voices and a defensive strategy for safeguarding personal data. This dual functionality ensures users can maintain secure communication, even with untrusted contacts, thus providing an additional layer of security.

Those skilled in the art will recognize that the present teachings are amenable to a variety of modifications and/or enhancements. For example, although the implementation of various components described herein may be embodied in a hardware device, it may also be implemented as a software only solution-e.g., an installation on an existing server. In addition, voice processing as disclosed herein may be implemented as a firmware, firmware/software combination, firmware/hardware combination, or a hardware/firmware/software combination.

Although particular embodiments of the present invention have been described above in detail, it will be understood that this description is merely for purposes of illustration and the above description of the invention is not exhaustive. Specific features of the invention are shown in some drawings and not in others, and this is for convenience only, and any feature may be combined with another in accordance with the invention. A number of variations and alternatives will be apparent to one having ordinary skills in the art. Such alternatives and variations are intended to be included within the scope of the claims.

Particular features that are presented in dependent claims can be combined and fall within the scope of the invention. The invention also encompasses embodiments as if dependent claims were alternatively written in a multiple dependent claim format with reference to other independent claims.

The scope of the present invention is defined in the following set of claims.

## Claims

1. A method for enhancing privacy and security in audio and video communications, comprising:
detecting, by a computing device of a user, whether a received incoming audio stream contains patterns and/or anomalies suggestive of artificially generated synthetic voice by performing a real-time voice analysis of the received audio stream, the real-time voice analysis comprising:
chunking the incoming audio stream into a plurality of audio segments using a sliding window technique;
identifying one or more audio features by processing the plurality of audio segments;
producing a sequence of probabilities indicative of a likelihood that the incoming audio stream comprises synthetic voice by means of a continuously trained machine learning algorithm processing the identified one or more audio features;
computing a probability score based on the produced sequence of probabilities; and
determining that the incoming audio stream contains artificially generated synthetic voice if the computed probability score is at least equal to a given threshold;
triggering, by the computing device, an alert to the user upon detection of an artificially generated synthetic voice; and
anonymizing, by the computing device, an outgoing audio stream of the user by modifying or removing, in real-time, voice signals comprising personal identifiable information of the user.

2. The method of claim 1, wherein before the computing of the probability score, the method comprises removing noise from the produced sequence of probabilities by post-processing the one or more audio features.

3. The method of any one of the previous claims, wherein the detecting step further comprises using a self-synthetic suspicious voice detection feedback received from the user, and the method further comprising capturing audio samples of the incoming audio stream and employing Privacy-preserving Federated Learning to train the machine learning algorithm.

4. The method of any one of the previous claims, wherein modifying the voice signals comprises changing a pitch, one or more frequencies, a speed, and/or a timbre of the voice signals.

5. The method of claim 4, further comprising adding at least one of noise and statistical information to the outgoing audio stream.

6. The method of any one of the previous claims, wherein the anonymizing step is triggered upon activation by the user.

7. The method of any one of the previous claims 1 to 5, wherein the anonymizing step is triggered upon detection of the artificially generated synthetic voice.

8. The method of any one of the previous claims, wherein the anonymizing step is triggered based on information, including a phone number, a pin number, a keyword or a password of the user.

9. The method of any one of the previous claims, wherein the machine learning algorithm comprises a neural network including a Convolutional Neural Network, a Recurrent Neural Network, a Residual Network, a Lambda Network, a Broadcasted Residual Learning, a Performer-based Network, a Conformer-based Network, a Branchformer-based Network, a Paraformer-based Network.

10. The method of claim 9, wherein the machine learning algorithm is continuously trained by using a database comprising audio recordings supplemented with metadata, the latter comprising labels, timestamps of events speech, recording conditions, anonymized speaker identifiers and/or features.

11. The method of claim 10, wherein the machine learning algorithm is further trained using data augmentation techniques and/or impulse responses from acoustic spaces and microphones.

12. The method of any one of the previous claims, wherein either before the detecting step or as part thereof, the method further comprises checking whether the incoming audio stream phone number is included in a spam phone list or is likely to be spam.

13. The method of any one of the previous claims, wherein upon detection of the artificially generated synthetic voice, and before the triggering of the alert, the method comprises analyzing whether the received incoming audio stream contains dangerous or gross content using a language model.

14. A computer device comprising at least one memory and one or more processors, the latter being configured to:
detect whether a received incoming audio stream contains patterns and/or anomalies suggestive of artificially generated synthetic voice by performing a real-time voice analysis of the received audio stream, the real-time voice analysis comprising:
chunking the incoming audio stream into a plurality of audio segments using a sliding window technique;
identifying one or more audio features by processing the plurality of audio segments;
producing a sequence of probabilities indicative of a likelihood that the incoming audio stream comprises synthetic voice by means of a continuously trained machine learning algorithm processing the identified one or more audio features;
computing a probability score based on the produced sequence of probabilities; and
determining that the incoming audio stream contains artificially generated synthetic voice if the computed probability score is at least equal to a given threshold;
trigger an alert to a user upon detection of an artificially generated synthetic voice; and
anonymize an outgoing audio stream of the user by modifying or removing, in real-time, voice signals comprising personal identifiable information of the user.

15. A non-transitory computer readable medium comprising code instruction that when executed in a computer device implement the method of any one of claims 1 to 13.
